# FASCICULE DE BREVET EUROPEEN

(11) **EP 0 800 978 B1**
(45) Date de publication et mention de la délivrance du brevet: **10.07.2002**
(21) Numéro de dépôt: 97400806.2
(22) Date de dépôt: 08.04.1997
(51) Int. Cl.: B62D 1/19, F16F 7/12

(54) **Ensemble de colonne de direction à absorption d'énergie de choc, notamment pour véhicule automobile**
Stossenergieaufnehmende Lenksäuleneinrichtung,insbesondere für ein Kraftfahrzeug
Shock energy absorbing steering column unit,especially for a motor vehicle

(30) Priorité: 12.04.1996 FR 9604620
(43) Date de publication de la demande: 15.10.1997
(73) Titulaire: ECIA - EQUIPEMENTS ET COMPOSANTS POUR L'INDUSTRIE AUTOMOBILE, F-25400 Audincourt (FR)
(72) Inventeur: Courvoisier, Patrick, 25600 Vieux-Charmont (FR); Bertrand, Jean-Marie, 25700 Mathay (FR); Amelia, Rosario, 25150 Bourguignon (FR)
(74) Mandataire: Habasque, Etienne Joel Jean-François

(56) Documents cités:
- AU-A- 2 995 577
- DE-A- 2 040 679
- DE-A- 2 365 063
- DE-A- 3 923 982
- GB-A- 2 288 654

## Description

La présente invention concerne un ensemble de colonne de direction à absorption d'énergie de choc notamment pour véhicule automobile.

Plus particulièrement, l'invention se rapporte à un ensemble de colonne de direction qui comporte un corps de colonne dans lequel est disposé un arbre de direction dont une extrémité est adaptée pour être reliée au reste du mécanisme de direction du véhicule et dont l'autre extrémité est adaptée pour recevoir un volant de direction.

Ce corps est généralement associé à proximité de chacune de ses extrémités, à des moyens de fixation sur le reste de la structure du véhicule, ces moyens de fixation autorisant un déplacement axial d'une partie du corps par rapport à la structure du véhicule, consécutivement à un choc sur celui-ci, tandis que des moyens d'absorption d'énergie de choc par contrôle du déplacement de la partie correspondante du corps, sont prévus.

Il a été constaté en effet qu'une cause très fréquente de blessures du conducteur d'un véhicule automobile, lors d'un choc, est le fait que celui-ci est projeté contre le volant de direction du véhicule et par suite contre la colonne de direction de celui-ci.

On a donc été amené à développer dans l'état de la technique, un certain nombre de dispositifs de protection permettant de limiter ces risques de blessures.

C'est ainsi par exemple que l'on a proposé dans l'état de la technique d'utiliser des modules à sac gonflable intégrés par exemple dans les coussins centraux des volants de direction.

Par ailleurs, on a également proposé des volants de direction présentant des caractéristiques particulières permettant d'absorber une certaine énergie de choc.

D'autres solutions ont consisté à utiliser des colonnes de direction rétractables comme décrites précédemment ou déformables.

Dans le cas où la colonne est déformable, elle comporte un axe de volant rétractable qui est logé dans un corps de colonne ou tube-enveloppe déformable, comportant par exemple des affaiblissements locaux calibrés ou encore des ondulations.

En cas de choc, le corps de colonne est amené à se déformer, l'énergie de choc étant absorbée par exemple par les affaiblissements ou ondulations de celui-ci.

Des exemples d'ensembles de colonne à absorption d'énergie de choc pourront être trouvés dans les documents DE-A-3 923 982 et GB-A-2 288 653, ce dernier document décrivant un ensemble conforme au préambule de la revendication 1.

Cependant, toutes ces structures présentent un certain nombre d'inconvénients, notamment au niveau de leur fabrication, de leur fiabilité de fonctionnement et de leur course d'absorption d'énergie.

Le but de l'invention est donc de résoudre ces problèmes.

A cet effet, l'invention a pour objet un ensemble de colonne de direction à absorption d'énergie de choc, notamment pour véhicule automobile, du type comportant un corps de colonne, dans lequel est disposé un arbre de direction, le corps étant associé à proximité de chacune de ses extrémités, à des moyens de fixation sur le reste de la structure du véhicule, autorisant un déplacement axial du corps par rapport à la structure, consécutivement à un choc sur celui-ci, et des moyens d'absorption d'énergie par contrôle du déplacement dudit corps, les moyens de fixation prévus à l'une des extrémités du corps comportant des moyens de fixation à décrochement contrôlé au choc, les moyens de fixation prévus à l'autre extrémité du corps comportant un bride de réception à coulissement du corps et les moyens d'absorption d'énergie comprenant des moyens de freinage du déplacement du corps dans la bride, consécutivement à un choc, prévus entre celle-ci et le corps, caractérisé en ce que les moyens de freinage comprennent au moins une nervure de l'une des pièces, bride ou corps, adaptée pour coopérer avec l'autre pièce, corps ou bride, et présentant un profil évolutif pour adapter le freinage et donc l'absorption d'énergie, au fur et à mesure du déplacement du corps dans la bride.

L'invention sera mieux comprise à la lecture de la description qui va suivre, donnée uniquement à titre d'exemple et faite en se référant aux dessins annexés, sur lesquels :
- la Fig.1 représente une vue schématique illustrant la structure générale d'un exemple de réalisation d'un ensemble de colonne de direction selon l'invention;
- la Fig.2 représente une vue de côté d'une bride et d'un corps de colonne entrant dans la constitution d'un exemple de réalisation d'un ensemble de colonne selon l'invention;
- la Fig.3 représente une vue en coupe prise suivant la ligne III-III de la figure 2; et
- la Fig.4 représente une vue en perspective d'un autre exemple de réalisation d'une bride entrant dans la constitution d'un ensemble de colonne selon l'invention.

On reconnaît en effet sur ces figures, un ensemble de colonne de direction à absorption d'énergie de choc, notamment pour véhicule automobile.

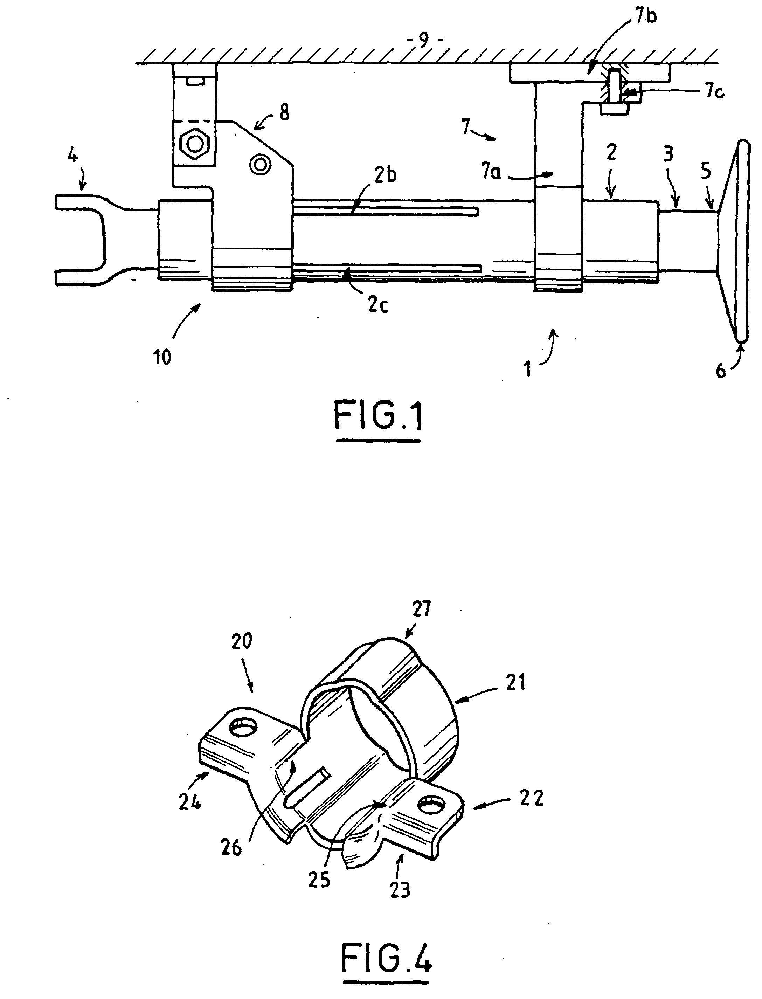

C'est ainsi par exemple que sur la figure 1, cet ensemble est désigné par la référence générale 1 et comporte un corps de colonne désigné par la référence générale 2, dans lequel est disposé un arbre de direction, désigné par la référence générale 3.

L'une des extrémités de cet arbre de direction, désignée par la référence générale 4, est adaptée pour être reliée au reste du mécanisme de direction du véhicule, par exemple par l'intermédiaire d'une articulation à la cardan, tandis que l'autre extrémité de celui-ci, désignée par exemple par la référence générale 5, est adaptée pour recevoir un volant de direction, par exemple 6, du véhicule.

L'arbre de direction est alors monté rotatif dans le corps de colonne.

Ce corps de colonne 2 est associé à proximité de chacune de ses extrémités à des moyens de fixation, par exemple 7 et 8, sur le reste de la structure du véhicule, désignée par la référence générale 9 sur cette figure.

On notera que dans cet ensemble de colonne de direction à absorption d'énergie de choc, ces moyens de fixation de l'ensemble de colonne 2 sur le reste de la structure du véhicule 9, autorisent un déplacement axial du corps de colonne par rapport à la structure, consécutivement à un choc sur celui-ci, comme cela est connu dans l'état de la technique.

De façon classique, des moyens d'absorption d'énergie de choc sont également prévus pour contrôler le déplacement du corps consécutivement à ce choc.

Selon l'invention, les moyens de fixation prévus à l'une des extrémités du corps, tels que les moyens désignés par la référence générale 7 sur cette figure, comprennent des moyens de fixation à décrochement contrôlé au choc, de type connu dans l'état de la technique.

C'est ainsi par exemple que ces moyens de fixation 7 peuvent comporter deux parties 7a et 7b, dont l'une 7a est associée au corps 2 et dont l'autre 7b est associée au reste de la structure du véhicule 9, ces deux parties étant reliées par des moyens de fixation à décrochement contrôlé désignés par la référence générale 7c sur cette figure et comportant par exemple des moyens tels que des pions frangibles ou autres, permettant un décrochage des deux parties 7a et 7b des moyens de fixation 7 de l'ensemble de colonne sur le reste de la structure du véhicule, consécutivement à un choc sur ce corps.

Ces moyens de fixation à décrochement contrôlé peuvent par exemple comporter des pions ou des patins frangibles ou à friction ou d'autres moyens bien connus dans l'état de la technique, de sorte que l'on ne les décrira pas plus en détail par la suite.

Par ailleurs, les moyens de fixation 8 prévus à l'autre extrémité du corps 2, comprennent une bride 10 de réception à coulissement du corps, tandis que les moyens d'absorption d'énergie comprennent des moyens de freinage du déplacement du corps dans la bride, prévus entre celle-ci et le corps.

Ces moyens de freinage peuvent en fait comporter au moins une nervure de l'une des pièces, bride ou corps, adaptée pour coopérer avec l'autre pièce, corps ou bride.

Dans l'exemple de réalisation représenté sur ces figures 1 à 3, plusieurs nervures sont prévues sur le corps de colonne 2.

C'est ainsi par exemple que ce corps de colonne 2 comporte quatre nervures 2a,2b,2c,2d régulièrement réparties autour de celui-ci et dans l'exemple de réalisation représenté sur ces figures, ces nervures sont par exemple venues de matière avec ce corps 2 lors de la fabrication de celui-ci.

Ce corps de colonne 2 est alors engagé dans une portion de réception cylindrique correspondante, par exemple 11, de la bride 10, cette bride comportant également au moins une portion d'accrochage sur le reste de la structure du véhicule 9.

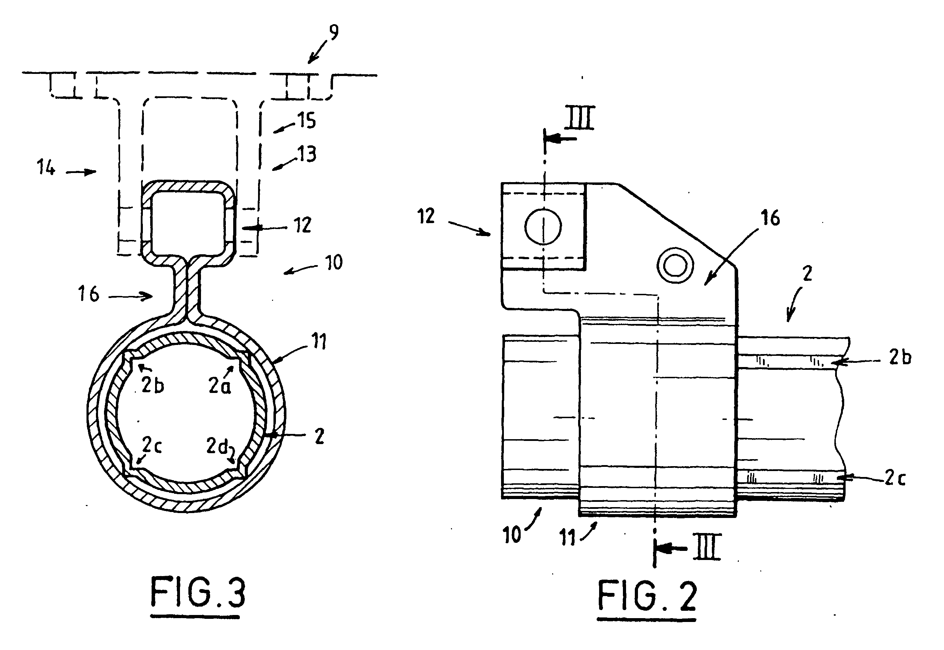

Sur les figures 2 et 3, cette bride 10 comporte une portion d'accrochage désignée par la référence générale 12, adaptée pour être engagée par exemple entre des ailes 13 et 14 d'une chape 15 de fixation de cette extrémité du corps de colonne sur le reste de la structure 9 du véhicule.

On notera que dans cet exemple de réalisation représenté sur ces figures 2 et 3, cette portion d'accrochage 12 de cette bride forme également entretoise permettant de déterminer un écartement donné entre les ailes 13 et 14 de la chape 15, lors de l'engagement et du serrage autour de celles-ci de moyens de vissage ou de fixation quelconques de la bride dans la chape et donc sur le reste de la structure du véhicule.

Par ailleurs, une portion de raccordement 16 est également prévue entre cette portion d'accrochage 12 et cette portion cylindrique 11 de la bride.

On notera que cette bride 10 peut en fait être réalisée à partir d'un flan de tôle mis en forme, par exemple par roulage, permettant de former la portion cylindrique, la portion d'accrochage formant entretoise et la portion de raccordement de celles-ci.

Dans ce cas, cette portion de raccordement 16 peut par exemple être obtenue par accostage des deux zones correspondantes du flan de tôle, celles-ci étant fixées l'une sur l'autre d'une manière ou d'une autre par exemple par sertissage, soudage ou autres, afin d'obtenir une rigidité suffisante de cette portion et donc de la bride.

Dans l'exemple illustré sur les figures 2 et 3, on notera que cette bride 10 disposée entre les ailes de la chape de raccordement de celle-ci sur le reste de la structure du véhicule, peut également former des moyens d'articulation de l'ensemble de colonne sur le reste de la structure du véhicule, dans le cas où l'ensemble de colonne est un ensemble de colonne de direction réglable en position par exemple angulaire.

De plus, on peut également constater sur la figure 2, que les portions d'accrochage 12 et cylindrique 11 de la bride 10 sont décalées axialement l'une par rapport à l'autre.

On notera également que les nervures du corps 2 participent à la rigidification de celui-ci et à la tenue au couple par exemple antivol de l'ensemble de colonne.

On conçoit alors que lors d'un choc sur l'ensemble de colonne de direction, les moyens frangibles 7c prévus dans les moyens de fixation 7 disposés à l'une des extrémités de l'ensemble de colonne 2, se rompent, ce qui autorise un coulissement axial du corps de colonne 2 dans la bride 10.

Ce déplacement du corps dans la bride est freiné par les moyens de freinage, tels que les nervures 2a,2b,2c et 2d, prévues entre ce corps 2 et la bride 10.

Ceci permet alors d'absorber une certaine énergie de choc sur une longueur relativement importante du corps, lors de son déplacement consécutivement à ce choc.

On notera à cet égard que ces nervures peuvent par exemple présenter un profil évolutif permettant d'obtenir une absorption d'énergie évolutive en fonction du déplacement du corps dans la bride.

C'est ainsi par exemple que ces nervures peuvent présenter une hauteur croissante permettant d'augmenter le freinage du déplacement du corps de colonne dans la bride au fur et à mesure de son déplacement.

Bien entendu, différents modes de réalisation de ces moyens de freinage peuvent être envisagés.

De même, différents modes de réalisation de la bride de fixation de cette extrémité de l'ensemble de colonne sur le reste de la structure du véhicule peuvent être envisagés, comme celui représenté sur la figure 4.

En effet, sur cette figure 4, on a représenté une bride désignée par la référence générale 20 comportant toujours une portion cylindrique 21 de réception à coulissement du corps de colonne et qui est également munie de moyens de fixation 22 de celle-ci sur le reste de la structure du véhicule.

Dans le cas illustré sur cette figure 4, ces moyens de fixation 22 comprennent par exemple deux ailes latérales 23 et 24 diamétralement opposées de la bride reliées au reste de la bride par des portions de raccordement 25 et 26 et permettant d'assurer la fixation de cette bride sur le reste de la structure du véhicule.

Par ailleurs, la portion cylindrique de réception du corps de colonne, désignée par la référence générale 21, peut également par exemple comporter une ou plusieurs ondulations 27 permettant de conférer à cette portion de la bride, certaines caractéristiques d'élasticité, utiles lors du fonctionnement des moyens de freinage interposés entre cette portion cylindrique de la bride et le corps de colonne.

Dans cet exemple également, le corps de colonne comporte des nervures de freinage adaptées pour permettre l'absorption d'énergie de choc.

Dans les différents exemples de réalisation qui viennent d'être décrits, les moyens de freinage sont constitués par des nervures prévues sur le corps de colonne.

Il va de soi bien entendu que ces nervures ou ces moyens de freinage de manière générale peuvent être prévus sur la bride, ces nervures ou moyens étant alors adaptés pour coopérer avec un corps de colonne lisse.

## Revendications

1. Ensemble de colonne de direction à absorption d'énergie de choc, notamment pour véhicule automobile, du type comportant un corps de colonne (2), dans lequel est disposé un arbre de direction (3), le corps (2) étant associé à proximité de chacune de ses extrémités, à des moyens de fixation (7,8) sur le reste de la structure du véhicule, autorisant un déplacement axial du corps par rapport à la structure, consécutivement à un choc sur celui-ci, et des moyens d'absorption d'énergie par contrôle du déplacement dudit corps, les moyens de fixation (7) prévus à l'une des extrémités du corps comportant des moyens de fixation à décrochement contrôlé au choc (7a, 7b, 7c), les moyens de fixation (8) prévus à l'autre extrémité du corps comportant un bride (10 ; 20) de réception à coulissement du corps (2) et les moyens d'absorption d'énergie comprenant des moyens de freinage (2a, 2b, 2c, 2d) du déplacement du corps (2) dans la bride (10; 20), consécutivement à un choc, prévus entre celle-ci et le corps, **caractérisé en ce que** les moyens de freinage comprennent au moins une nervure (2a, 2b, 2c, 2d) de l'une des pièces, bride ou corps, adaptée pour coopérer avec l'autre pièce, corps ou bride, et présentant un profil évolutif pour adapter le freinage et donc l'absorption d'énergie, au fur et à mesure du déplacement du corps dans la bride.

2. Ensemble selon la revendication 1, **caractérisé en ce qu'**il est prévu plusieurs nervures (2a, 2b, 2c, 2d) régulièrement réparties entre la bride et le corps.

3. Ensemble selon la revendication 1 ou 2, **caractérisé en ce que** ladite au moins une nervure (2a, 2b, 2c, 2d) est prévue sur le corps (2).

4. Ensemble selon l'une quelconque des revendications précédentes, **caractérisé en ce que** la bride (10 ; 20) comporte au moins une portion cylindrique (11 ; 21) de réception du corps (2) et au moins une portion d'accrochage (12 ; 22) sur le reste de la structure du véhicule.

5. Ensemble selon la revendication 4, **caractérisé en ce que** ladite bride (20) comporte deux portions d'accrochage (23, 24) en forme d'ailes latérales diamétralement opposées.

6. Ensemble selon la revendication 4, **caractérisé en ce que** ladite portion d'accrochage (12) est adaptée pour être engagée entre les ailes (13,14) d'une chape (15) du reste de la structure du véhicule (9).

7. Ensemble selon la revendication 6, **caractérisé en ce que** ladite portion d'accrochage (12) se présente sous la forme d'une entretoise adaptée pour s'étendre entre les ailes de la chape.

8. Ensemble selon l'une quelconque de revendications 4 à 7, **caractérisé en ce que** les portions d'accrochage et cylindrique de la bride (10 ; 20) sont décalées axialement l'une par rapport à l'autre.

9. Ensemble selon l'une quelconque des revendications précédentes, **caractérisé en ce que** ladite bride est réalisée à partir d'un flan de tôle roulé.

10. Ensemble selon l'une quelconque des revendications précédentes, **caractérisé en ce que** lesdits moyens à décrochement contrôlé comprennent des moyens frangibles (7c).

11. Ensemble selon l'une quelconque des revendications précédentes, **caractérisé en ce qu'**il est réglable en position angulaire, et **en ce que** la bride (10 ; 20) forme des moyens d'articulation de celui-ci sur le reste de la structure du véhicule.

## Patentansprüche

1. Stoßenergieaufnehmende Lenksäuleneinrichtung insbesondere für ein Kraftfahrzeug, die einen Säulenkörper (2) aufweist, in dem eine Lenkwelle (3) angeordnet ist und dem in Nähe jedes seiner Enden Mittel (7,8) zur Befestigung an der restlichen Fahrzeugstruktur zugeordnet sind, die eine axiale Bewegung des Körpers bezüglich der Struktur als Folge eines Stoßes auf diesen zulassen, sowie Mittel zur Energieaufnahme durch Steuerung der Bewegung dieses Körpers, wobei die an einem der Enden des Körpers vorgesehenen Befestigungsmittel (7) Befestigungsmittel mit gesteuerter Aushängung bei Stoß (7a,7b,7c) aufweisen, die am anderen Ende des Körpers vorgesehenen Befestigungsmittel (8) eine Schelle (10;20) zur verschiebbaren Aufnahme des Körpers (2) aufweisen und die energieaufnehmenden Mittel Mittel (2a,2b,2c,2d) zum Bremsen der Bewegung des Körpers (2) in der Schelle (10;20) als Folge eines Stoßes aufweisen, die zwischen dieser und dem Körper vorgesehen sind, **dadurch gekennzeichnet, dass** die Bremsmittel mindestens eine Rippe (2a,2b,2c,2d) eines der Teile Schelle oder Körper umfassen, die dafür ausgelegt ist, mit dem anderen Teil Körper oder Schelle zusammenzuwirken, und ein sich änderndes Profil aufweist, um die Bremsung und damit die Energieaufnahme im Maße der Bewegung des Körpers in der Schelle anzupasssen.

2. Einrichtung nach Anspruch 1, **dadurch gekennzeichnet, dass** mehrere Rippen (2a,2b,2c,2d) vorgesehen sind, die zwischen der Schelle und dem Körper regelmäßig verteilt sind.

3. Einrichtung nach Anspruch 1 oder 2, **dadurch gekennzeichnet, dass** diese mindestens eine Rippe (2a,2b,2c,2d) an dem Körper (2) vorgesehen ist.

4. Einrichtung nach einem der vorhergehenden Ansprüche, **dadurch gekennzeichnet, dass** die Schelle (10;20) mindestens einen zylindrischen Teil (11,12) zur Aufnahme des Körpers (2) und mindestens einen Teil (12;22) zur Aufhängung an der restlichen Fahrzeugstruktur aufweist.

5. Einrichtung nach Anspruch 4, **dadurch gekennzeichnet, dass** die Schelle (20) zwei Aufhängungsteile (23,24) in Form von einander diametral entgegengesetzten seitlichen Schenkeln aufweist.

6. Einrichtung nach Anspruch 4, **dadurch gekennzeichnet, dass** das Aufhängungsteil (12) dafür ausgelegt ist, zwischen die Schenkel (13,14) einer Gabel (15) der restlichen Fahrzeugstruktur (9) eingeführt zu werden.

7. Einrichtung nach Anspruch 6, **dadurch gekennzeichnet, dass** der Aufhängungsteil (12) die Form eines Stegs hat, der dafür ausgelegt ist, sich zwischen den Schenkeln der Gabel zu erstrecken.

8. Einrichtung nach einem der Ansprüche 4 bis 7, **dadurch gekennzeichnet, dass** der Aufhängungsteil und der zylindrische Teil der Schelle (10;20) gegeneinander axial versetzt sind.

9. Einrichtung nach einem der vorhergehenden Ansprüche, **dadurch gekennzeichnet, dass** die Schelle aus einem gerollten Blechstück hergestellt ist.

10. Einrichtung nach einem der vorhergehenden Ansprüche, **dadurch gekennzeichnet, dass** die Mittel mit gesteuerter Aushängung Bruchmittel (7c) aufweisen.

11. Einrichtung nach einem der vorhergehenden Ansprüche,
**dadurch gekennzeichnet, dass** sie in Winkelstellung verstellbar ist und dass die Schelle (10;20) Mittel zu ihrer Anlenkung an der restlichen Fahrzeugstruktur bildet.

## Claims

1. Impact-energy absorbing steering-column unit, particularly for a motor vehicle, of the type comprising a column body (2) in which a steering shaft (3) is disposed, the body (2) being associated, in the vicinity of each of its ends, with means (7, 8) for fixing to the rest of the vehicle structure, permitting an axial displacement of the body relative to the structure as a result of an impact on the body, and means for absorbing energy by control of the displacement of the said body, the fixing means (7) provided at one of the ends of the body comprising fixing means (7a, 7b, 7c) with controlled release upon impact, the fixing means (8) provided at the other end of the body comprising a collar (10; 20) for housing the body (2) slidingly, and the energy-absorption means comprising means (2a, 2b, 2c, 2d), provided between the collar and the body for braking the displacement of the body (2) in the collar (10; 20) as a result of an impact, **characterized in that** the braking means comprise at least one rib (2a, 2b, 2c, 2d) of one of the elements, collar or body, the rib being adapted to cooperate with the other element, body or collar, and having a progressive profile for adapting the braking, and hence the energy absorption, progressively as the body is displaced in the collar.

2. Unit according to Claim 1, **characterized in that** a plurality of uniformly-distributed ribs (2a, 2b, 2c, 2d) is provided between the collar and the body.

3. Unit according to Claim 1 or Claim 2, **characterized in that** the said at least one rib (2a, 2b, 2c, 2d) is provided on the body (2).

4. Unit according to any one of the preceding claims, **characterized in that** the collar (10; 20) comprises at least one cylindrical portion (11; 21) for housing the body (2) and at least one portion (12; 22) for engagement on the rest of the vehicle structure.

5. Unit according to Claim 4, **characterized in that** the collar (20) comprises two engagement portions (23, 24) in the form of diametrally opposed lateral flanges.

6. Unit according to Claim 4, **characterized in that** the said engagement portion (12) is adapted to be engaged between the sides (13, 14) of a yoke (15) of the rest of the vehicle structure (9).

7. Unit according to Claim 6, **characterized in that** the said engagement portion (12) is in the form of a spacer adapted to extend between the sides of the yoke.

8. Unit according to any one of Claims 4 to 7, **characterized in that** the engagement and cylindrical portions of the collar (10; 20) are offset axially relative to one another.

9. Unit according to any one of the preceding claims, **characterized in that** the said collar is made from a bent sheet-metal blank.

10. Unit according to any one of the preceding claims, **characterized in that** the said controlled release means comprise breakable means (7c).

11. Unit according to any one of the preceding claims, **characterized in that** its angular position is adjustable, and **in that** the collar (10; 20) forms means for the articulation of the unit to the rest of the vehicle structure.
